(19) Europäisches Patentamt
European Patent Office
Office européen des brevets

(11) Veröffentlichungsnummer: **0 297 207**
**A2**

# (12) EUROPÄISCHE PATENTANMELDUNG

(21) Anmeldenummer: **88103364.1**

(22) Anmeldetag: **04.03.88**

(51) Int. Cl.4: **A01N 25/04 , A01N 25/30 , A61K 9/10**

(30) Priorität: **11.03.87 DE 3707711**

(43) Veröffentlichungstag der Anmeldung: **04.01.89 Patentblatt 89/01**

(84) Benannte Vertragsstaaten: **BE CH DE FR GB IT LI NL SE**

(71) Anmelder: **HOECHST AKTIENGESELLSCHAFT**
**Postfach 80 03 20**
**D-6230 Frankfurt am Main 80(DE)**

Anmelder: **BAYER AG**
**Konzernverwaltung RP Patentabteilung**
**D-5090 Leverkusen 1 Bayerwerk(DE)**

(72) Erfinder: **Damó, Zoltan**
**Am Holderbusch 24**
**D-6239 Eppstein/Taunus(DE)**
Erfinder: **Frisch, Gerhard, Dr.**
**Westerwaldstrasse 7**
**D-6393 Wehrheim(DE)**
Erfinder: **Röchling, Hans, Dr.**
**Geierfeld 25**
**D-6232 Bad Soden am Taunus(DE)**
Erfinder: **Niessen, Heinz-Josef, Dr.**
**Pannenberg 73**
**D 5060 Bergisch-Gladbach 2(DE)**
Erfinder: **Wirth, Wolfgang, Dr.**
**Hanftalstrasse 34**
**D-5202 Hennef 1(DE)**

## (54) Öl-in-Wasser-Emulsionen, Verfahren zu deren Herstellung und deren Verwendung.

(57) Öl-in-Wasser-Emulsionen (Mikroemulsionen), die 0,01 - 80 Gew.-% mindestens eines in Wasser wenig löslichen agrochemischen Wirkstoffes, eines Wirkstoffes zur Bekämpfung von Schädlingen im Haushalts- und Hygiene-Bereich und/oder eines pharmakologisch wirksamen Stoffes, 1 bis 30 Gew.-% eines Emulgatorengemisches aus nichtionischen und anionischen Verbindungen und mindestens einem Alkylarylsulfonsäure-Salz, wie in der Beschreibung definiert, sowie Wasser und gegebenenfalls 1 bis 30 Gew.-% mindestens eines mit Wasser wenig mischbaren organischen Lösungsmittels und/oder eines Solubilisators sowie gegebenenfalls 0,05 bis 15 Gew.-% an Zusatzstoffen enthalten, wobei die Summe der Komponenten jeweils 100 Gew.-% beträgt, ein Verfahren zur Herstellung dieser wäßrigen Mikroemulsionen und deren Verwendung.

EP 0 297 207 A2

## Öl-in-Wasser-Emulsionen, Verfahren zu deren Herstellung und deren Verwendung

Die vorliegende Erfindung betrifft Öl-in-Wasser-Emulsionen, speziell eine O/W-Mikroemulsion von agrochemischen Wirkstoffen, Wirkstoffen zur Bekämpfung von Schädlingen im Haushalts- und Hygiene-Bereich und/oder pharmakologisch wirksamen Stoffen. Die Erfindung betrifft außerdem ein Verfahren zur Herstellung dieser Öl-in-Wasser-Emulsionen sowie deren Verwendung.

Es sind bereits Öl-in-Wasser-Emulsionen von zahlreichen in Wasser wenig löslichen agrochemischen Wirkstoffen bekannt, welche neben den Wirkstoffen jeweils noch entweder einen oberflächenaktiven Stoff und ein Verdickungsmittel oder aber eine relativ große Menge an oberflächenaktiven Stoffen enthalten (vgl.US 4303640 DE-A 30 11 611, FR-A 2 452 250 und JP-A 122 628-77). Dieser Zusatz an Verdickungsmittel bzw. an großen Tensidmengen ist mit zusätzlichen Kosten verbunden und stellt somit einen gravierenden Nachteil der bekannten Öl-in-Wasser-Emulsionen dar. Hinzu kommt, daß die bisher beschriebene Herstellung von derartigen Emulsionen nicht allgemein anwendbar ist. Im wesentlichen lassen sich danach nämlich nur solche in Wasser wenig löslichen Wirkstoffe emulgieren, die bei Raumtemperatur flüssig sind oder zumindest einen sehr niedrigen Schmelzpunkt aufweisen. Nachteilig ist auch, daß die bekannten Öl-in-Wasser-Emulsionen häufig nicht ausreichend kältestabil sind, und daß in manchen Fällen eine Zwangsemulgierung mit Hilfe von Homogenisatoren erforderlich ist.

Weiterhin sind aus der DE-C 824 949, der GB 85 4952 der CH-A 275 705 und der US 4564632 zahlreiche Alkylarylpolyglykolether und deren Verwendung als Emulgatoren in agro-chemischen Mitteln bekannt. Kombinationen dieser nicht-ionischen Emulgatoren mit ionischen Komponenten werden in den genannten Druckschriften allerdings nicht erwähnt. Ferner geht aus der DE-A 2 041 480 hervor, daß Emulgator-Kombinationen aus einer ionischen und einer nicht-ionischen Komponente zur Herstellung von Emulsionen geeignet sind, welche agrochemische Wirkstoffe enthalten. Die betreffenden Emulsionen enthalten jedoch relativ große Mengen an organischen Solventien und sind nur relativ kurze Zeit beständig.

Verbesserte homogene wäßrige Formulierungen mit Alkylarylpolyglykolethern als Emulgatoren sind auch in US 4500348 CA 1209361 und CA 1209362 beschrieben.

Es wurden Öl-in-Wasser-Emulsionen (Mikroemulsionen) gefunden, die 0,01 - 80 Gew.-% mindestens eines in Wasser wenig löslichen agrochemischen Wirkstoffes, eines Wirkstoffes zur Bekämpfung von Schädlingen in Haushalts-und Hygiene-Bereichen und/oder eines pharmakologisch wirksamen Stoffes,

- 1 bis 30 Gew.-% eines Emulgatorengemisches aus

a) 30-80, vorzugsweise 50-60 Gew.-% einer oder mehrerer Verbindungen der Formeln I - V

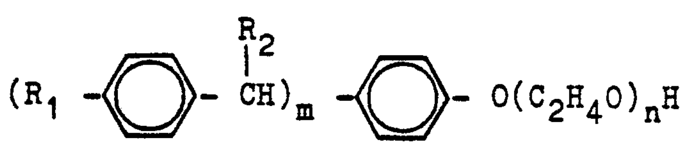

I

in welcher
$R_1$ Wasserstoff oder $C_1$-$C_{16}$-Alklyl,
$R_2$ Wasserstoff oder Methyl,
m Zahlen 1 bis 4 und
n Zahlen von 10 - 60 bedeuten,

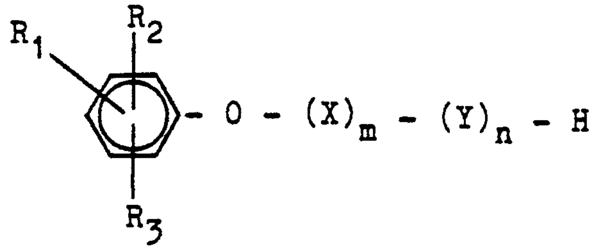

II

in welcher
$R_1$, $R_2$ und $R_3$ jeweils Wasserstoff oder $C_1$-$C_{20}$-Alkyl,
X und Y eine Oxyethylen- oder Oxypropylen-Gruppe, wobei jedoch X und Y nicht gleichzeitig eine

Oxethylen-oder Oxpropylen-Einheit darstellen,
m Zahlen von 2 bis 45 und
n Zahlen von 2 bis 90 bedeuten,

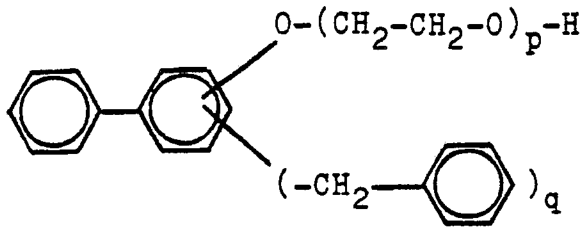

III

in welcher
p Zahlen von 5 - 40 und
q Zahlen von 1 - 3 bedeuten,

$$HO(CH_2CH_2O)_x-(\overset{CH_3}{\overset{|}{C}}HCH_2O)_y-(CH_2CH_2O)_zH \qquad IV$$

wobei x, y und z Zahlen darstellen, die so gewählt sind, daß das Molekulargewicht 1800 bis 16000 insgesamt beträgt,

$$RO-(\overset{CH_3}{\overset{|}{C}}HCH_2O)_x-(CH_2CH_2O)_y-H \qquad V$$

in welcher R $C_3$-$C_{18}$-Alkyl bedeutet und x und y Zahlen darstellen, die so gewählt sind, daß das Molekulargewicht insgesamt 2000 bis 7000 beträgt,

b) 20-50, vorzugsweise 30-40 Gew.-% einer Verbindung der Formel VI

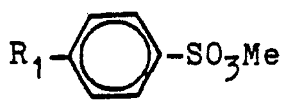

VI

wobei $R_1$ $C_4$-$C_{35}$-Alkyl und Me ein Metallkation aus der II. und III. Gruppe des Periodensystems bedeutet, sowie

c) 0,1-20, vorzugsweise 0,1-10 Gew.-% einer oder mehrerer Verbindungen der Formel VII - XIII

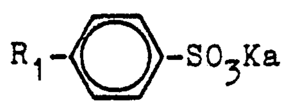

VII

in welcher $R_1$ die gleiche Bedeutung hat wie für Formel VI angegeben und Ka ein Kation bedeutet, ausgenommen die Kationen der Bedeutung unter Me in Formel VI,

$$RO-(CH_2CH_2O)_xSO_3Ka \qquad VIII$$

in welcher R $C_6$-$C_{18}$-Alkyl, x Zahlen von 2 bis 8 bedeuten und Ka die für Formel VII angegebene Bedeutung hat,

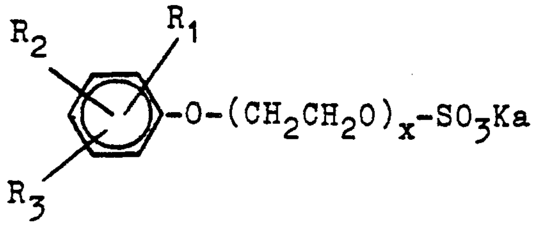

IX

in welcher $R_1$, $R_2$ und $R_3$ Wasserstoff oder $C_1$-$C_{20}$-Alkyl, x eine Zahl von 5 bis 50 bedeuten und Ka die für Formel VII angegebene Bedeutung hat,

$R\text{-}(O)_nSO_3Ka$ X

in welcher R $C_8$-$C_{18}$-Alkyl oder $C_8$-$C_{18}$-Alkenyl oder, für den Fall n = 0 auch $C_4$-$C_{18}$-Chloralkyl, n 0 oder 1 bedeuten und Ka die für Formel VII angegebene Bedeutung hat,

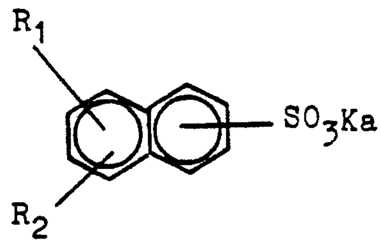

XI

in welcher $R_1$ $C_3$-$C_{13}$-Alkyl und $R_2$ Wasserstoff oder $R_1$ und $R_2$ $C_3$-$C_{13}$-Alkyl bedeuten und Ka die für Formel VII angegebenen Bedeutungen hat,

$R\text{-}SO_2\text{-}N(R_1)\text{-}A\text{-}COOKa$

XII

in welcher

R $C_{12}$-$C_{22}$-Alkyl, Phenyl, Naphthyl oder Anthracinyl, $R_1$ Wasserstoff oder $C_1$-$C_4$-Alkyl und A einen gegebenenfalls durch eine oder mehrere Methyl- oder Ethylgruppen substituierten Alkylenrest mit mehr als 4 C-Atomen bedeutet und Ka die für Formel VII angegebenen Bedeutungen hat,

$R\text{-}CON(R_1)\text{-}(CH_2)_m\text{-}COOKa$

XIII

in welcher R $C_{12}$-$C_{18}$-Alkyl oder $C_6$-$C_{14}$-Cycloalkyl, $R_1$ Wasserstoff oder $C_1$-$C_6$-Alkyl, m 1 oder 2 bedeuten und Ka die für Formel VII angegebenen Bedeutungen hat, - und Wasser, und

- gegebenenfalls 1 bis 30 Gew.-% mindestens eines mit Wasser wenig mischbaren organischen Lösungsmittels und/oder eines Stabilisators sowie
- gegebenenfalls 0,1 bis 15 Gew.-% an Zusatzstoffen enthalten, wobei die Summe der Komponenten jeweils 100 Gew.-% beträgt.

Es ist äußerst überraschend, daß die erfindungsgemäßen Öl-in-Wasser-Emulsionen (Mikroemulsion) nicht nur unter den Bedingungen wie u.a. in EP-A 0 062 181, EP-A 0 107 009 und EP-A 0 107 023 beschrieben, stabil sind, sondern auch über 35 °C sowie unter +10 °C bis -10 °C bis zu 3 Monate und länger sowohl chemisch wie auch physikalisch stabil sind. Die hervorragende Hochtemperaturbeständigkeit und Kältestabilität der erfindungsgemäßen Emulsionen konnte nicht vorausgesehen werden.

Ferner mußte unter Berücksichtigung der technischen Lehre, die aus der DE-A 2 041 480 hervorgeht, angenommen werden, daß auch Emulgatorkombinationen aus einer ionischen und einer nichtionischen Komponente nur dann zur Herstellung von stabilen wäßrigen Emulsionen geeignet sind, wenn eine relativ große Menge an organischen Lösungsmitteln vorhanden ist. Im Gegensatz zu den Erwartungen zeigte sich

jedoch, daß sich die erfindungsgemäßen Mikroemulsionen durch eine hervorragende Beständigkeit auch bei hohen Temperaturen auszeichnen, obwohl sie keine oder nur geringe Mengen an organischen Lösemitteln enthalten. Auch wenn sie größere Mengen an Lösemittel enthalten, ergeben sich immer noch Mikroemulsionen, die thermodynamisch besonders stabil sind und nicht gewöhnliche O/W-Emulsionen sind. Ebenso ist eine gute Kältestabilität gewährleistet.

Die erfindungsgemäßen Öl-in-Wasser-Emulsionen (Mikroemulsionen) zeichnen sich durch eine Reihe von Vorteilen aus:

- keine oder geringe Mengen an organischen Lösemitteln,
- hoher Flammpunkt der Emulsionen,
- keine Geruchsbelästigung durch organische Lösemittel,
- geringere Phytotoxizität im Vergleich zu den herkömmlichen Formulierungen,
- unter Praxisbedingungen sowohl physikalisch als auch chemisch stabil,
- bei Langzeitlagerung bleiben diese Emulsionen zwischen -10° C bis +54° C chemisch und physikalisch unverändert,
- einfache Herstellungsweise der Emulsionen (keine Homogenisatoren notwendig), nur rühren,
- bei Raumtemperatur feste bzw. flüssige, in Wasser wenig lösliche Wirkstoffe lassen sich gleichermaßen gut zu Mikroemulsionen emulgieren.

Die erfindungsgemäßen Emulsionen stellen Mikroemulsionen dar, sie enthalten mindestens einen in Wasser wenig löslichen agrochemischen Wirkstoff, einen Wirkstoff zur Bekämpfung von Schädlingen im Haushalts- und Hygienesektor und/oder einen pharmakologisch wirksamen Stoff. Diese Wirkstoffe liegen in der Ölphase im flüssigen bzw. gelösten Zustand vor.

Als Wirkstoffe kommen sowohl solche Substanzen in Frage, die bei Raumtemperatur flüssig sind, als auch solche, die bei Raumtemperatur fest sind. Voraussetzung für flüssige Wirkstoffe ist lediglich, daß sie in Wasser schwer löslich sind. Die Löslichkeit dieser Substanzen beträgt bei 20° C in Wasser maximal 0,5 Gew.-%. Feste Wirkstoffe müssen darüber hinaus jedoch in einem mit Wasser wenig mischbaren organischen Lösungmittel und/oder einem Solubilisator hinreichend löslich sein.

Unter agrochemischen Stoffen sind im vorliegenden Fall alle üblicherweise im Pflanzenschutz verwendeten Wirkstoffe zu verstehen. Hierzu gehören zum Beispiel Insektizide, Akarizide, Nematizide, Fungizide, Herbizide, Wachstumsregulatoren und Düngemittel. Als Beispiele für derartige Wirkstoffe seien im einzelnen genannt:

Ethyl 2-diethoxythiophosphoryloxy-5-methyl-pyrazolo [1,5-a]pyrimidin-6-carboxylat
2-[4(2,4-dichlorphenoxy)phenoxy]propionsäure methylester
7-chlorbicyclo[3.2.0]-hepta-2,6-dien-6-yl dimehtylphosphat
0, 0-diethyl 0-1-phenyl- 1,2,4-triazol-3-yl phosphorthioat
1,4,5,6,7,7-hexachlor-8,9,10-trinorborn-5-en-2,3-ylen dimethylsulfit
(S)-α-cyano-3-phenoxybenzyl (1R, 3R)-3-(2,2-dibromvinyl)-2,2-dimethylcyclopropancarboxylat
(4-chlor-o-tolyloxy)essigsäure-butylglykolester
2-(4-chlor-o-tolyloxy)propionsäure butylglykolester
α, α, α-trifluor-2,6-dinitro-N, N-dipropyl-p-toluidin
0,0-Diethyl-0-(4-nitro-phenyl)-thiono-phosphorsäureester
0,0-Dimethyl-0-(4-nitro-phenyl)-thiono-phosphorsäureester
0- Ethyl-0-(4-methylthio-phenyl)-S-propyl-dithiophosphat
0,0-(Diethylthionophosphoryl)-α-oximino-phenylessigsäurenitril
± 2-[4-(6 Chlorbenzoxazol-2-yloxy)phenoxy]-propionsäureethylester
2-isopropoxy-phenyl-N-methylcarbamat
3-Methylthio-4-amino-6-tert.-butyl-1,2,4-triazin-5-on
3-Methylthio-4-isobutylidenamino-6-tert.-butyl-1,2,4-triazin-5-on
2-Chlor-4-ethylamino-6-isopropylamino-1,3,5-triazin
2,3-Dihydro-2,2-dimethyl-7-benzofuranyl-methyl-carbamat
3,5-Dimethyl-4-methylthiophenyl-N-methyl-carbamat
0,0-Diethyl-0-(3-chlor-4-methyl-7-cumarinyl)-thiophosphat γ-Hexachlorcyclohexan
6,7,8,9,10,10-Hexachlor-1,5,5A,6,9,9A-hexahydro-6,9-methan-2,4,3-benzo-dioxathiepin-3-oxid
1,4,5,6,7,8,8-Heptachlor-4,7-endo-methylen-3A,4,7,7A-tetrahydroinden
2-(2-Furyl)-benzimidazol
5-Amino-1-bis-(dimethylamido)-phosphoryl-3-phenyl-1,2,4-triazol
4-Hydroxy-3-(1,2,3,4-tetrahydro-1-naphthyl)-cumarin
S-[1,2-Bis-(ethoxycarbonyl)-ethyl]-0,0-dimethyl-dithiophosphorsäureester
0,0-Dimethyl-0-(4-methylmercapto-3-methyl-phenyl)-thionophosphorsäureester

0-Ethyl-0-(2-isopropyloxycarbonyl-phenyl)-N-isopropylthionophosphorsäureesteramid
1-(4-Chlorphenoxy)-3,3-dimethyl-1-(1,2,4-triazol-1-yl)-2-butanon
(S)-α-Cyano-3-phenoxybenzyl (1R)-cis-3-(2,2-dibromvinyl)-2,2-dimethylcyclo-propancarboxylat
2,2-Dimethyl-3-(β, β-dichlorvinyl)-cyclopropancarbonsäure-α-cyano-3-phenoxy-4-fluor-benzylester

Unter Wirkstoffen zur Bekämpfung von Schädlingen im Haushalts- und Hygiene-Bereich sind im vorliegenden Fall alle üblichen in Wasser wenig löslichen Wirkstoffe zu verstehen. Als Beispiele für derartige Wirkstoffe seien im einzelnen genannt:
2-Isopropoxy-phenyl-N-methylcarbamat
0,0-Diethyl-0-(4-nitro-phenyl)-thionophosphorsäureester
0,0-Dimethyl-0-(4-nitro-phenyl)-thionophosphorsäureester
S-[1,2-Bis-(ethoxycarbonyl)-ethyl]-0,0-dimethyl-dithiophosphorsäureester
0,0-Dimethyl-0-(3-methyl-4-nitro-phenyl)-thionophosphorsäureester
0,0-Dimethyl-0-(4-methylmercapto-3-methyl-phenyl)-thionophosphorsäureester
γ-hexachlorcyclohexan
(Cyclohex-1-en-1, 2-dicarboximidomethyl)-2,2-dimethyl-3-(2-methylpropenyl)-cyclopropancarboxylat

Unter pharmakologisch wirksamen Stoffen sind im vorliegenden Fall vorzugsweise im veterinärmedizinischen Bereich einsetzbare, in Wasser wenig lösliche Stoffe zu verstehen. Als Beispiel für derartige Wirkstoffe sei genannt:
2,2-Dimethyl-3-[β-(p-chlorphenyl)-β-chlorvinyl]-cyclo-propancarbonsäure-α-cyano-3-phenoxy-4-fluor-benzylester

Die in den erfindungsgemäßen Öl-in-Wasser-Emulsionen (Mikroemulsionen) als Emulgatoren enthaltenen nichtionischen Verbindungen sind unter den Formeln I - V definiert.

Als Beispiel für Alkylaryl-polyglykolether der Formel I seien im einzelnen genannt:
- Bis- [α-methyl-(4-methyl-benzyl) ]-phenyl-polyglykolether mit durchschnittlich 27 Mol Ethylenoxyd-Einheiten pro Molekül.
- Bis- [α-methyl(4-dodecyl-benzyl) ]-phenyl-polyglykolether mit durchschnittlich 27 Mol Ethylenoxyd-Einheiten pro Molekül.
- Tris- [α-methyl(4-methyl-benzyl) ]- phenylpolyglykolether mit durchschnittlich 17 Mol Ethylenoxyd-Einheiten pro Molekül.
- Tris-(α-methyl-benzyl)-phenyl-polyglykolether mit durchschnittlich 22 Mol Ethylenoxyd-Einheiten pro Molekül.
- Tris-(α-methyl-benzyl)-phenyl-polyglykolether mit durchschnittlich 40 Mol Ethylenoxyd-Einheiten pro Molekül.

Die in der Praxis verwendeten Emulgatoren dieses Typs sind im allgemeinen Gemische aus mehreren Verbindungen der Formel I die sich durch den Substitutionsgrad am Phenylring unterscheiden. Dadurch errechnen sich für den Index m (Formel I) auch gebrochene Zahlen als Mittelwerte. Beispielsweise erwähnt seien Substanzen, wie unter Formel I beschrieben, für die sich folgende durchschnittliche Zusammensetzungen ergeben:

$$R_1 = H; \quad m = 2,7; \quad n = 22$$
$$R_1 = CH_3; \quad m = 2,7; \quad n = 27$$
$$R_1 = H; \quad m = 2,7; \quad n = 40$$

Die Alkylarylpolyglykolether der Formel I sind bekannt.

Bei den Alkylaryl-polyglykolethern der Formel II stehen $R_1$, $R_2$ und $R_3$ vorzugsweise für $C_1$-$C_4$-Alkyl oder $R_1$ alternierend mit $R_2$, $R_3$ für $C_1$-$C_{20}$-Alkyl und $R_2$ mit $R_3$ für Wasserstoffatome. X und Y stehen jeweils für eine Oxethylen- oder Oxpropylen-Gruppe, wobei jedoch X und Y nicht gleichzeitig für eine Oxethylen- oder Oxpropylen-Einheit stehen. Der Index m steht vorzugsweise für Zahlen von 10 - 30, und der Index n steht vorzugsweise für Zahlen von 10 - 40. Die Zahlen für die Indices m und n stellen Durchschnittswerte dar.

Die in der Praxis verwendeten Emulgatoren dieses Typs sind im allgemeinen Gemische aus mehreren Verbindungen der Formel II. Insbesondere handelt es sich hierbei um Gemische von Verbindungen, die sich einerseits durch die Zahl der Ethylenoxyd- bzw. Propylenoxyd-Einheiten und andererseits durch die Art der Alkylsubstitutenten unterscheiden. Beispielsweise erwähnt seien Substanzen, für die sich die folgenden durchschnittlichen Zusammensetzungen ergeben:

II a   $R_1$ = Butyl; $R_2$ = Butyl; $R_3$ = Butyl; X = Propylenoxid; Y = Ethylenoxid; m = 10 Mol; n = 30 Mol;

II b   $R_1$ = Nonyl; $R_2$ = H; $R_3$ = H; X = Propylenoxid; Y = Ethylenoxid; m = 24 Mol; n = 40 Mol

Die Alkylarylpolyglykolether der Formel II sind bekannt.

Bei den Aryl-polyglykolethern der Formel III steht der Index p vorzugsweise für Zahlen von 8 bis 18, und der Index q steht vorzugsweise für Zahlen von 1 bis 2. Die Zahlen für die Indices p und q stellen Durchschnittswerte dar.

Die in der Praxis verwendeten Emulgatoren dieses Typs sind im allgemeinen Gemische aus mehreren Verbindungen der Formel III. Insbesondere handelt es sich hierbei um Gemische von Verbindungen, die sich durch die Zahl der Ethylenoxyd-Einheiten bzw. durch den Substitutionsgrad am Phenylrest unterscheiden. Dadurch können sich für die Indices p und q auch gebrochene Zahlen als Mittelwerte errechnen. Beispielsweise erwähnt seien Substanzen für die sich die folgenden durchschnittlichen Zusammensetzungen ergeben:

IIIa   p = 11; q = 1,35

IIIb   p = 12; q = 1,70

Die Aryl-polyglykolether der Formel III sind ebenfalls bekannt.

Als Beispiele für Blockpolymere der Formel IV seien hier folgende Produkte erwähnt:

| Gesamtmolgewicht | Molgewicht des Propylenoxid-Kerns | % Gehalt an Ethylenoxid |
|---|---|---|
| 1800-2000 | 1750 | 10 |
| 2500-2900 | 1750 | 20 |
| 3100-3700 | 1750 | 40 |
| 6600-9000 | 1750 | 80 |
| 4000-4500 | 3000 | 30 |
| 4200-5500 | 3000 | 40 |
| 7000-8000 | 3000 | 60 |

Bei den Verbindungen der Formel V handelt es sich um Gemische, die sich einerseits durch den Startalkohol, z.B. Butylalkohol oder Alfole, andererseits durch den unterschiedlichen Oxpropylen- bzw. Oxethylengehalt unterscheiden. Erwähnt seien Substanzen mit der folgenden Zusammensetzung:

$\alpha$-Butyl-omega-hydroxypoly-(oxpropylen)-Blockpolymer mit einem Molgewicht von ca. 1500, Gehalt an Ethylenoxid 54 %, Gesamt-Molgewicht 3500.

$\alpha$-$C_{14}$-$C_{20}$-omega-hydroxypoly-(oxpropylen)-Blockpolymer mit einem Molgewicht von ca. 1200, Gehalt an Ethylenoxid 53 %, Gesamt-Molgewicht 2500-3000.

Als Beispiele für die Alkylaryl-sulfonsäuren der Formel VI seien im einzelnen folgende Sulfonsäuren genannt:

4-(n- oder iso-Dodecyl)-benzol-sulfonsäure

4-(n-Nonyl)-benzol-sulfonsäure

Diese Säuren liegen vor in Form ihrer Salze mit Kationen aus der II. und III. Gruppe des Periodensystems. Bevorzugt ist das Calciumsalz.

Den Verbindungen der Formel VII liegen die gleichen Sulfonsäuren zugrunde wie bei der Formel VI. Als Kationen kommen hier infrage beispielsweise Alkali- oder Ammonium-Ionen oder quartäre Ammonium-Ionen, die sich ableiten von Mono-, Di- und Trimethylamin, Mono-, Di- und Triethylamin, Monoisopropylamin, Mono- und Dibutylamin, 3-Methoxypropylamin, Mono-2-ethylhexylamin, Di-methylaminopropylamin, Mono-, Di- und Triethanolamin, 3-Aminopropanol, Monomethylethanolamin, Dimethylethanolamin, Monoisopropanolamin, Triisopropanolamin, Cyclohexylamin, N,N-Dimethylcyclohexylamin, Morpholin, Pyridin, Chinolin, Ethylendiamin, Diethylentriamin, Pentaethylenhexamin oder oxethylierten Fettaminen. All diese Kationen können auch in den anderen anionischen Verbindungen der Formeln VII bis XIII zugegen sein. Bevorzugt als Kationen sind hier in allen Fällen Alkali- und Ammonium-Ionen.

Die Alkylaryl-sulfonsäure-Salze der Formeln VI und VII sind bekannt. Sie werden im allgemeinen als 50 - 75 %ige Lösungen in org. Lösemitteln, z.B. in n- oder i-Butanol, eingesetzt, können grundsätzlich auch höher konzentriert oder auch ohne Lösemittel verwendet werden.

Als Beispiele für Verbindungen der Formel VIII werden im einzelnen genannt:
α-($C_{12}$-$C_{14}$)-Alkyl-omega-hydroxypoly-(oxethylen)-sulfat-Natriumsalz mit einem Oxethylengehalt von 2 Mol,
α-($C_{12}$-$C_{14}$)-Alkyl-omega-hydroxypoly-(oxethylen)-sulfat Natriumsalz mit einem Oxethylengehalt von 3 Mol.
Als Beispiele für
Alkylphenyl-omega-hydroxypoly-(oxethylen)-sulfat-Salz der Formel IX wird Tributyl-phenyl-omega-hydroxypoly-(oxethylen)-sulfat-Natriumsalz genannt mit einem Oxethylengehalt von 8 Mol. Diese Ethersulfat-Salze der Formeln VIII und IX sind ebenfalls bekannt. Sie werden im allgemeinen als 30 - 70 %ige wäßrige Pasten eingesetzt.

Als Beispiele für Alkyl-($C_8$-$C_{18}$)-Sulfat oder -Sulfonat-Salze der Formel X seien die folgenden Verbindungen genannt:
($C_{12}$-$C_{14}$)-Alkyl-Sulfat-Natrium-Salz
($C_{16}$-$C_{18}$)-Alkyl-Sulfat-Natrium-Salz
($C_{13}$-$C_{17}$)-Alkyl-Sulfonat-Natrium-Salz
($C_{14}$-$C_{16}$)-Alkenyl-Sulfonat-Natrium-Salz

Diese Verbindungen werden im allgemeinen als 20 - 80%ige wäßrige Pasten bzw. Lösungen oder als Pulverware 100 %ig eingesetzt. Als Beispiel für Chlor-($C_4$-$C_{18}$)-Alkyl-Sulfonat wie unter Formel X definiert, ist die folgende Verbindung zu nennen: Chlor-Alkyl-($C_{13}$-$C_{17}$)-Sulfonat-Natrium-Salz Der Chlorgehalt beträgt allgemein 1,4-1,6 Grammatom Chlor pro Mol Alkyl-Sulfonat. Diese Chloralkylsulfonate sind bekannt und werden im allgemeinen als 50 - 70 %ige Lösung in organischen Lösungsmitteln, z.B. in n- oder i-Butanol, eingesetzt, können grundsätzlich aber auch ohne Lösungsmittel verwendet werden.

Als Beispiel für Alkylnaphthalinsulfonsäure-Salze der Formel XI sei das Mononònylnaphthalinsulfonat-Natriumsalz genannt.

Diese Alkylnaphthalinsulfonsäure-Salze sind bekannt. Sie werden im allgemeinen als 30 - 60 %ige Lösungen in Wasser/Butanol oder als 100 %ige Substanzen eingesetzt.

In Formel XII steht R vorzugsweise für einen $C_{12}$-$C_{18}$-Alkyrest, $R_1$ für Wasserstoff, A für 1 und Ka für eine Mischbase von Natronlauge und Triethanolamin. Bei der Arylsulfonamidocarbonsäure steht R vorzugsweise für einen Benzolkern, $R_1$ für eine Methylgruppe, A für 5 und Ka für Triethanolamin. Diese Alkyl- oder Arylsulfonamidocarbonsäuren der Formel XII sind bekannt. Sie werden im allgemeinen als ca. 90-95 %ige wäßrige Lösungen eingesetzt.

In der Formel XIII steht R vorzugsweise für einen Alkylrest mit 12 Kohlenstoffatomen oder einen Alkylrest mit $C_{16}$-$C_{18}$-Kohlenstoffatomen, $R_1$ für einen Methylrest und Ka für Natrium. Die Verbindungen der Formel XIII sind bekannt. Die Verbindungen mit m = 1 werden als 30 %ige wäßrige Lösung, die Verbindungen mit m = 2 als ca. 33 oder 64%iges Pulver eingesetzt.

Als organische Lösungsmittel, die in den erfindungsgemäßen Öl-in-Wasser-Emulsionen gegebenenfalls enthalten sein können, kommen alle üblichen, mit Wasser wenig mischbaren organischen Solventien infrage. Vorzugsweise genannt seien aromatische Kohlenwasserstoffe wie Xylol, Toluol und Dimethylnaphthalin, Aromatengemische ferner chlorierte aromatische Kohlenwasserstoffe wie Chlorbenzole, außerdem aliphatische Kohlenwasserstoffe wie Benzin und Petrolether, weiterhin halogenierte aliphatische Kohlenwasserstoffe wie Methylenchlorid und Chloroform, darüber hinaus cycloaliphatische Kohlenwasserstoffe wie Cyclohexan, außerdem Alkohole und Ketone wie n-Butanol, i-Butanol, n-Hexanol, iso-Hexanol, n-Octanol, Cyclohexanol, Benzylalkohol, Di-n-butyl-keton und Isophoron, Cyclohexanon, Acetophenon und ferner Ether und Ester wie Propylenglykolmonomethylether, Phtalsäureester und Propylen-glykolmonomethyletheracetat.

Als Solubilisatoren, die in den erfindungsgemäßen Öl-in-Wasser-Emulsionen enthalten sein können, kommen alle üblichen Lösungsvermittler in Betracht. Vorzugsweise verwendbar sind Alkylphenole, Xylenole oder Kresole, die pro Mol mit 1 bis 8 Mol Ethylenoxid kondensiert sind. Speziell genannt sei in diesem Zusammenhang p-Kresol, das pro Mol mit 1 bis 8 Mol Ethylenoxid kondensiert ist, sowie Xylenole, die mit 4 bis 8 Mol Ethylenoxid kondensiert sind.

Als Zusatzstoffe, die in den erfindungsgemäßen Öl-in-Wasser-Emulsionen gegebenenfalls enthalten sein können, kommen Konservierungsmittel, Farbstoffe, Puffer und Kältestabilisatoren in Betracht. Als Beispiele für Konservierungsmittel seien 2-Hydroxybiphenyl und Sorbinsäure genannt. Als Beispiele für Farbstoffe seien Azofarbstoffe und Phthalocyanin-Farbstoffe angeführt. Als Puffersubstanz sei hier Natriumdihydrogen-Phosphat, Ammonacetat, Diammoniumphosphat erwähnt. Als Beispiele für Kältestabilisatoren seien vorzugsweise Glyzerin, aber auch Harnstoff, Ethylenglykol, Propylenglykol, Zucker und Salze, wie Ammoniumsulfat und Natriumoleat genannt. Diese Kältestabilisatoren können in den erfindungsgemäßen Emulsionen in Mengen von 2 bis 20, vorzugsweise 5 bis 15 Gew.-% anwesend sein. Als Beispiel für einen Synergisten sei 3,4-Methylendioxy-6propyl-benzyl-n-butyl-diethylenglykolether (Piperonylbutoxid) genannt.

In den erfindungsgemäßen Öl-in-Wasser-Mikroemulsionen können die prozentualen Anteile der enthaltenen Komponenten innerhalb bestimmter Bereiche variiert werden. Der Anteil an Wirkstoff bzw. Wirkstoffen liegt im allgemeinen zwischen 0,1 und 80 Gew.-%, vorzugsweise zwischen 5 und 80 Gew.-%. Der Anteil an Emulgator-Gemisch beträgt im allgemeinen 1 bis 30 Gew.-%, vorzugsweise 3 bis 16 Gew.-%, wobei das Verhältnis der Emulgatoren zueinander ebenfalls in einem bestimmten Bereich variiert werden kann. Im allgemeinen entfallen auf 1 Teil nichtionische Emulgatoren der Formeln I - V 1 bis 1,3 Teile anionische Emulgatorenmischungen, der Formeln VI - XIII.

Mit Wasser wenig mischbare organische Lösungsmittel und/oder Solubilisatoren können in Anteilen von 1 bis 30 Gew.-%, vorzugsweise 5 bis 20 Gew.-% enthalten sein. Der prozentuale Anteil an Wasser in den erfindungsgemäßen Mikroemulsionen errechnet sich jeweils als Differenz aus 100 Gew.-% und der Summe der prozentualen Anteile der übrigen Komponenten.

In den erfindungsgemäßen Mikroemulsionen kann das Verhältnis von Wirkstoff(en), gegebenenfalls im Gemisch mit organischen Solventien und/oder Solubilisatoren, zu Emulgatorgemisch in einem bestimmten Bereich variiert werden. Im allgemeinen entfallen auf 1 Teil Emulgatorgemisch 1 bis 15 Gew.-Teile, vorzugsweise 2 bis 10 Gew.-Teile an Wirkstoff(en), gegebenenfalls im Gemisch mit organischen Solventien und/oder Solubilisatoren.

Bei der Herstellung der erfindungsgemäßen Öl-in-Wasser-Mikroemulsionen können vorzugsweise alle diejenigen Komponenten verwendet werden, die bereits im Zusammenhang mit der Beschreibung der erfindungsgemäßen Öl-in-Wasser-Mikroemulsionen als bevorzugt genannt wurden. Verwendet man bei dem erfindungsgemäßen Verfahren einen Wirkstoff, der bei Temperaturen bis zu 40 °C im flüssigen Zustand vorliegt, so erübrigt sich im allgemeinen die Zugabe eines mit Wasser wenig mischbaren organischen Lösungsmittels und/oder eines Solubilisators.

Verwendet man bei dem erfindungsgemäßen Verfahren hingegen einen Wirkstoff, der bei Temperaturen bis zu 40 °C im festen Zustand vorliegt, so ist es erforderlich, den betreffenden Wirkstoff vor der Emulgierung in einem mit Wasser wenig mischbaren organischen Lösungsmittel und/oder Solubilisator zu lösen. Die Menge an organischem Lösemittel und/oder Solubilisator wird dabei so bemessen, daß sie gerade zur Lösung der Festsubstanz ausreicht. Die Reaktionstemperaturen können bei dem erfindungsgemäßen Verfahren innerhalb eines größeren Bereiches variiert werden. Im allgemeinen arbeitet man bei Temperaturen zwischen 10 °C und 80 °C, vorzugsweise zwischen 20 °C und 60 °C.

Bei der Durchführung des erfindungsgemäßen Verfahrens geht man im allgemeinen so vor, daß man zunächst eine homogene Lösung aus einem oder mehreren Wirkstoffen, den Emulgatoren, gegebenenfalls mit Wasser wenig mischbaren organischen Lösungsmitteln und/oder Solubilisator sowie gegebenenfalls mit Zusatzstoffen herstellt und diese Mischung dann unter Rühren in gegebenenfalls Zusatzstoffe enthaltendes Wasser gibt. Die Mengen der Komponenten werden dabei so gewählt, daß die Komponenten in der resultierenden Öl-in-Wasser-Mikroemulsion in der jeweils gewünschten Konzentration vorliegen. Die Reihenfolge, in der die Komponenten der organischen Phase zusammengegeben werden, ist variabel. Die Zugabe der organischen Phase zu der wäßrigen Phase erfolgt zweckmäßigerweise langsam unter gleichmäßigem Rühren mit üblichen Rührgeräten. Dabei bildet sich eine feinteilige Mikroemulsion, in der die Tröpfchen einen Durchmesser zwischen 0,05 µm und 1 µm oder kleiner aufweisen. Eine Nachbehandlung der entstehenden Öl-in-Wasser-Mikroemulsion mit Homogenisatoren ist nicht notwendig, kann aber vorgenommen werden, sofern dieses gewünscht wird.

Die erfindungsgemäßen Öl-in-Wasser-Mikro-Emulsionen können entweder in der zubereiteten Form oder nach vorheriger Verdünnung appliziert werden. Die Aufwandmenge richtet sich dabei nach der Konzentration der Wirkstoffe in der Öl-in-Wasser-Mikro-Emulsion und nach der jeweiligen Indikation.

Die Anwendung der erfindungsgemäßen Öl-in-Wasser-Mikro-Emulsionen erfolgt nach den üblichen Methoden, also zum Beispiel durch Spritzen, Sprühen oder Gießen.

Die Herstellung der erfindungsgemäßen Öl-in-Wasser-Mikro-Emulsionen geht aus den folgenden Beispielen hervor.

Herstellungsbeispiele

Die zu formulierenden Wirkstoffe oder Wirkstoff-Lösungen werden unter Rühren bei Temperaturen zwischen 20 °C und 40 °C mit einem Emulgatorgemisch versetzt. Die hierbei entstehende homogene Lösung wird innerhalb von 2-4 Minuten unter leichtem Rühren (Flügelrührer) in Wasser gegeben. Nach beendeter Zugabe wird noch 5 Minuten nachgerührt. Es bildet sich eine leicht gefärbte, leicht viskose Öl-in-Wasser-Mikroemulsion, die bei längerer Lagerung zwischen -10 °C und 54 °C keine chemischen oder physikalischen Veränderungen zeigt.
Falls notwendig, versetzt man das zur Bildung der Mikroemulsion notwendige Wasser mit Stabilisatoren, Konservierungsmittel, Kältestabilisator und Farbstoff. Dies wird durch die nachfolgenden Beispiele erläutert:

## Herstellungsbeispiele

| Komponenten | 1 | 2 | 3 | 4 | 5 | 6 | 7 | 8 | 9 | 10 |
|---|---|---|---|---|---|---|---|---|---|---|
| | % | % | % | % | % | % | % | % | % | % |
| O,O-Dimethyl-O-(4-methylmercapto-3-methyl-phenyl)-thionophosphorsäureester 100 %ig = Lebaycid | 50 | 50 | 50 | 50 | 50 | 25 | 25 | 50 | 50 | 50 |
| Tris-(α-methyl-benzyl)phenyl-polyglykolether mit durchschnittlich 22 Mol Oxethyleneinheiten | 8,5 | 8,6 | 9,7 | 10,2 | 18 | 7,5 | 8,1 | 8,7 | 8,5 | 7,5 |
| n-Dodecylbenzolsulfonsäure-Calciumsalz, 70 %ig in Isobutanol | 5,9 | 5,8 | 7,9 | 7,4 | 11,9 | 6,9 | 6,3 | 6,7 | 6,9 | 6,9 |
| Wasser | 34 | 24 | 30 | 20 | 20 | 59 | 49 | 34 | 24 | 24 |
| n-Dodecylbenzolsulfonsäure Natriumsalz 100 %ig | 1,6 | 1,6 | 2,4 | 2,4 | 0,1 | 1,6 | | | | |
| Glycerin | | 10 | | 10 | | | 10 | | 10 | 10 |
| α-Alkyl($C_{12}$-$C_{14}$)-omega-hydroxypoly-(oxethylen(-sulfat Natriumsalz, mit einem Oxethylengehalt von ca. 2 Mol 100 %ig | | | | | | | | 0,6 | 0,6 | |
| Tributyl-phenyl-omega-hydropoly-(oxethylen)-sulfat-Natriumsalz, mit einem α-Ethylengehalt von durchschnittlich 8 Mol 100 %ig | | | | | | | | | | 1,6 |
| Temperaturstabilität °C | 22 bis 54 | -5 bis 54 | 22 bis 54 | -5 bis 54 | -5 bis 54 | 22 bis 54 | 10 bis 54 | 22 bis 50 | 10 bis 22 | 10 bis 45 |

Herstellungsbeispiele

| Komponenten | 11 | 12 | 13 |
|---|---|---|---|
| | % | % | % |
| O,O-Dimethyl-O-(4-methylmercapto-3-methyl-phenyl)-thionophosphorsäureester 100 %ig | 50 | 50 | 50 |
| Tris-(α-methyl-benzyl)phenyl-polyglykolether mit durchschnittlich 22 Mol Oxethyleneinheiten | 8,6 | 9,4 | 9,0 |
| n-Dodecylbenzolsulfonsäure-Calciumsalz, 70 %ig in Isobutanol | 6,8 | 6,2 | 6,6 |
| Wasser | 34 | 34 | 34 |
| Alkyl($C_{12}$-$C_{14}$)-sulfat Natriumsalz 100 %ig | 0,6 | | |
| Alkyl-($C_{16}$-$C_{18}$)-sulfat Natriumsalz 100 %ig | | | |
| Alkyl-($C_{13}$-$C_{17}$)-sulfonat Natriumsalz 100 %ig | | 0,4 | |
| Alkenyl-($_{14}$-$C_{16}$)-sulfonat Natriumsalz 100 %ig | | | 0,4 |
| Temperaturstabilität °C | 22 bis 50 | 22 bis 45 | 22 bis 45 |

## Herstellungsbeispiele

| Komponenten | 14 | 15 |
|---|---|---|
| | % | % |
| 0,0-Dimethyl-0-(4-methylmercapto-3-methyl-phenyl)-thionophosphorsäureester 100 %ig | 50 | 50 |
| Tris-(α-methyl-benzyl)phenyl-polyglykolether mit durchschnittlich 22 Mol Oxethyleneinheiten | 8,6 | 7,9 |
| n-Dodecylbenzolsulfonsäure-Calciumsalz, 70 %ig in Isobutanol | 5,8 | 6,5 |
| Wasser | 34 | 34 |
| Chlor-Alkyl-($C_{15}$-$C_{17}$)-sulfonat Natriumsalz 100 %ig | 1,6 | |
| Mononomylnaphthalinsulfonat-Natriumsalz 100 %ig | | 1,6 |
| Alkyl-($C_{12}$-$C_{18}$)-sulfonamido-essigsäure-Natrium und Triethanolamin-Mischbase 100 %ig | | |
| Temperaturstabilität °C | 35 bis 54 | 10 bis 45 |

Herstellungsbeispiele

| Komponenten | 16 |
|---|---|
| | % |
| O,O-Dimethyl-O-(4-methylmercapto-3-methyl-phenyl)-thionophosphorsäureester 100 %ig | 25 |
| Tris-(α-methyl-benzyl)phenyl-polyglykolether mit durchschnittlich 22 Mol Oxethyleneinheiten | 7,2 |
| n-Dodecylbenzolsulfonsäure-Calciumsalz, 70 %ig in Isobutanol | 4,8 |
| Wasser | 62 |
| N-Methyl-Arylsulfonyl-ε-Aminocapronsäure-Triethanol-ammoniumsalz 100 %ig | 1,0 |
| N-Methyl-lauroylsarkosid-Natriumsalz 100 %ig | |
| N-Methyl-oleoylmethyltaurid Natriumsalz 100 %ig | |
| Temperaturstabilität °C | 22 bis 50 |

## Herstellungsbeispiele

| Komponenten | 17 | 18 | 19 | 20 | 21 |
|---|---|---|---|---|---|
| | % | % | % | % | % |
| 2-(4-Chlor-O-tolyloxy)-propionsäure-butylglykolester 100 %ig<br>= CMPP-butylglykolester | 25 | 50 | | | |
| (4-Chlor-O-tolyloxy)-essigsäure butylglykolester 100 %ig<br>= MPCA-butylglykolester | | | 25 | 50 | |
| Ethyl-2-diethoxythiophosphoryloxy-5-methylpyrazolo-[1,5-a]-pyrimidin-6-carboxylat 60 %ig in Xylol | | | | | 50 |
| Tris-(α-methyl-benzyl)phenyl-polyglykolether mit durchschnittlich 22 Mol Oxethyleneinheiten | 8,6 | 8,6 | 8,6 | 8,6 | 8,6 |
| n-Dodecylbenzolsulfonsäure-Calciumsalz, 70 %ig in Isobutanol | 5,8 | 5,8 | 5,8 | 5,8 | 5,8 |
| Wasser | 49 | 24 | 49 | 24 | 24 |
| n-Dodecylbenzolsulfonsäure-Natriumsalz 100 %ig | 1,6 | 1,6 | 1,6 | 1,6 | 1,6 |
| Glycerin | 10 | 10 | 10 | 10 | 10 |
| Temperaturstabilität °C | -10 bis 40 | -10 bis 50 | -10 bis 40 | -10 bis 50 | -10 bis 50 |

## Herstellungsbeispiele

| Komponenten | 22 | 23 | 24 | 25 |
|---|---|---|---|---|
| | % | % | % | % |
| α,α,α-Trifluor-2,6-dinitro-N,N-dipropyl-p-toluidin 40 %ig in Solvesso 150 | 25 | | | |
| ± 2-[4-(6-Chlorbenzoxyzol-2-yloxy)-phenoxy]-propionsäureethylester 40 %ig Cyclohexan | | 40 | | |
| 7-Chlorbicyclo-[3·2·0]-hepta-2,6-dien-6-yldimethylphosphat in Beispiel 24 100 %ig in Beispiel 25 50 %ig in Xylol | | | 50 | 50 |
| Tris-(α-methyl-benzyl)phenyl-polyglykolether mit durchschnittlich 22 Mol Oxethyleneinheiten | 8,6 | 8,6 | 8,6 | 8,6 |
| n-Dodecylbenzolsulfonsäure-Calciumsalz, 70 %ig in Isobutanol | 5,8 | 5,8 | 5,8 | 5,8 |
| Wasser | 49 | 34 | 24 | 24 |
| n-Dodecylbenzolsulfonsäure-Natriumsalz 100 %ig | 1,6 | 1,6 | 1,6 | 1,6 |
| Glycerin | 10 | 10 | 10 | 10 |
| Temperaturstabilität °C | -10 bis 50 | 20 bis 50 | -10 bis 50 | -10 bis 50 |

Herstellungsbeispiele

| Komponenten | 26 | 27 | 28 | 29 | 30 | 31 | 32 |
|---|---|---|---|---|---|---|---|
| | % | % | % | % | % | % | % |
| 0,0-Diethyl-0-1-phenyl-1,2,4-triazol-3-ylphosphorthioat<br>in Beispiel 26 + 27 70%ig in Xylol<br>in Beispiel 28 50%ig in Xylol | 57,2 | 35,7 | 50 | | | | |
| 2-[4-(2,4-dichlorphenoxy)-phenoxy] propionsäure-methylester<br>in Beispiel 29 20%ig in Xylol<br>in Beispiel 30 40%ig in Xylol<br>in Beispiel 31 25%ig in Xylol | | | | 50 | 50 | 39 | |
| Xylol | | | | | | | 25 |
| Tris-(α-methyl-benzyl)phenyl-polyglykolether mit durchschnittlich 22 Mol Oxethyleneinheiten | 8,6 | 8,6 | 8,6 | 8,6 | 8,6 | 8,6 | 8,6 |
| n-Dodecylbenzolsulfonsäure-Calciumsalz, 70 %ig in Isobutanol | 5,8 | 5,8 | 5,8 | 5,8 | 5,8 | 5,8 | 5,8 |
| Wasser | 16,8 | 38,3 | 24 | 24 | 24 | 35 | 49 |
| n-Dodecylbenzolsulfonsäure-Natriumsalz 100 %ig | 1,6 | 1,6 | 1,6 | 1,6 | 1,6 | 1,6 | 1,6 |
| Glycerin | 10 | 10 | 10 | 10 | 10 | 10 | 10 |
| Temperaturstabilität °C | -10 bis 10 | -10 bis 30 | -10 bis 40 | -10 bis 40 | -10 bis 40 | -10 bis 50 | -10 bis 60 |

## Herstellungsbeispiele

| Komponenten | 33 | 34 | 35 | 36 |
|---|---|---|---|---|
| | % | % | % | % |
| Solvesso 150 | 50 | 25 | | |
| Isophoron | | | 25 | |
| Cyclohexan | | | | 25 |
| Tris-(α-methyl-benzyl)phenyl-polyglykolether mit durchschnittlich 22 Mol Oxethyleneinheiten | 8,6 | 8,6 | 8,6 | 8,6 |
| n-Dodecylbenzolsulfonsäure-Calciumsalz, 70 %ig in Isobutanol | 5,8 | 5,8 | 5,8 | 5,8 |
| Wasser | 24 | 49 | 49 | 49 |
| n-Dodecylbenzolsulfonsäure-Natriumsalz 100 %ig | 1,6 | 1,6 | 1,6 | 1,6 |
| Glycerin | 10 | 10 | 10 | 10 |
| Temperaturstabilität °C | -10 bis 50 | -10 bis 50 | -10 bis 50 | -10 bis 50 |

Herstellungsbeispiele

| Komponente | 37 | 38 | 39 | 40 |
|---|---|---|---|---|
| | % | % | % | % |
| 0,0-Dimethyl-0-(4-methylmercapto-3-methyl-phenyl)-thiophosphat | 50,0 | 50,0 | 50,0 | 50,0 |
| Tris-(α-methyl-p-methylbenzyl)-phenylpolyglykolether mit durchschnittl. 17 Mol Oxyethyleneinheiten | 5,1 | 5,1 | 5,1 | 5,1 |
| Tris-(α-methyl-p-methylbenzyl)-phenylpolyglykolether mit durchschnittl. 27 Mol Oxyethyleneinheiten | 2,5 | 2,5 | 2,5 | 2,5 |
| n-Dodecylbenzolsulfonsäure-calciumsalz, 70 %ig in n-Butanol | 4,9 | 4,9 | 4,9 | 4,9 |
| n-Dodecylbenzolsulfonsäure-Na-Salz | 0,5 | 0,7 | 0,25 | 0,4 |
| Polyglykolether mit einem mittleren Molekulargewicht von 400 | | | 5,0 | 5,0 |
| Wasser | 37,0 | 36,8 | 32,25 | 32,1 |
| Temperaturstabilität °C | 22 bis 42 | 25 bis 45 | 3 bis 38 | 18 bis 38 |

Herstellungsbeispiele

| Komponenten | 41 | 42 | 43 | 44 | 45 |
|---|---|---|---|---|---|
| | % | % | % | % | % |
| O-Ethyl-O-(3-methyl-4-methylthiophenyl)-isopropylamidophosphat | 28,0 | 28,0 | 28,0 | 28,0 | 28,0 |
| n-Butanol | 20,0 | 20,0 | 20,0 | 20,0 | 20,0 |
| Tris-(α-methyl-p-methylbenzyl)-phenylpolyglykolether mit durchschnittl. 17 Mol Oxyethyleneinheiten | 15,3 | 15,3 | 15,5 | | 4,0 |
| Tris-(α-methyl-p-methylbenzyl)-phenylpolyglykolether mit durchschnittl. 27 Mol Oxyethyleneinheiten | | | | 15,3 | 11,0 |
| N-Dodecylbenzolsulfonsäure-calciumsalz, 70 %ig in n-Butanol | 1,6 | 1,7 | | 1,7 | |
| n-Dodecylbenzolsulfonsäure-Na-Salz | 0,1 | 1,0 | 1,5 | 1,0 | 1,5 |
| Wasser | 35,0 | 34,0 | 35,0 | 34,0 | 35,5 |
| Temperaturstabilität °C | 0 bis 25 | 0 bis 32 | 0 bis 35 | 0 bis 42 | 0 bis 42 |

**Beispiel 46**

28,1 Gew.-Teile Endosulfan (95,5 %ig) werden in 19,5 Gew.-Teilen eines $C_9$, $C_{10}$, $C_{11}$-Aromaten-Gemisches und 13 Gew.-Teilen Cyclohexanon unter Rühren vollständig gelöst. Ebenso werden 5 Gew.-Teile Phenylsulfonat-Calcium, 10 Gew.-Teile Tristyrylphenol + 20 Mol Ethylenoxid, 4 Gew.-Teile $C_{13}$-$C_{17}$-sek.-Alkansulfonat in 20,4 Gew.-Teilen Wasser gelöst. Diese Lösung wird langsam unter Rühren in die erstgenannte Lösung gegeben und dann wird 1 Stunde nachgerührt. Man erhält eine transparente Emulsion, die 14 Tage bei 54 °C hinsichtlich Wirksubstanzgehalt und anwendungstechnischen Eigenschaften lagerstabil ist. Die Kältestabilität beträgt 14 Tage bei 0 °C. Bei -10 °C können nach etwa 11 Tagen Spuren von Kristallen auftreten.

**Ansprüche**

1. Öl-in-Wasser-Emulsionen, gekennzeichnet durch einen Gehalt von 0,01 - 80 Gew.-% mindestens eines in Wasser wenig löslichen agrochemischen Wirkstoffes, eines Wirkstoffes zur Bekämpfung von Schädlingen in Haushalts- und Hygiene-Bereichen und/oder eines pharmakologisch wirksamen Stoffes,
- 1 bis 30 Gew.-% eines Emulgatorengemisches aus
a) 30-80, vorzugsweise 50-60 Gew.-% einer oder mehrerer Verbindungen der Formeln I - V

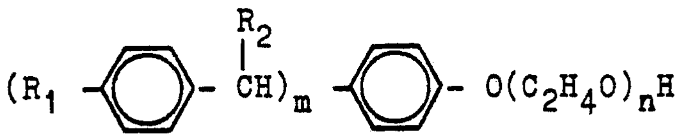

I

in welcher
$R_1$ Wasserstoff oder $C_1$-$C_{16}$-Alkyl,
$R_2$ Wasserstoff oder Methyl,
m Zahlen von 1 bis 4 und
n Zahlen von 10 - 60 bedeuten,

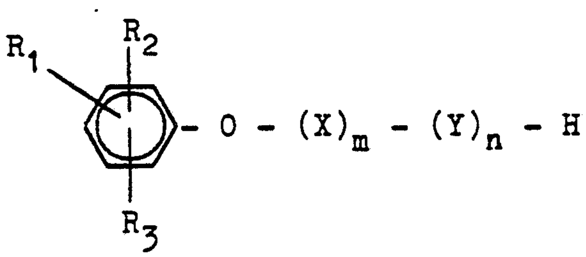

II

in welcher
$R_1$, $R_2$ und $R_3$ jeweils Wasserstoff oder $C_1$-$C_{20}$-Alkyl,
X und Y eine Oxyethylen- oder Oxypropylen-Gruppe, wobei jedoch X und Y nicht gleichzeitig eine Oxethylen-oder Oxpropylen-Einheit darstellen,
m Zahlen von 2 bis 45 und
n Zahlen von 2 bis 90 bedeuten,

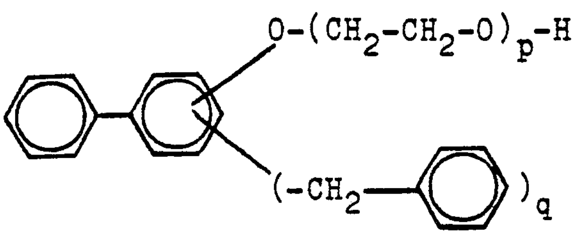

III

in welcher

p Zahlen von 5 - 40 und
q Zahlen von 1 - 3 bedeuten,

$$HO(CH_2CH_2O)_x\text{-}(\overset{CH_3}{\overset{|}{C}}HCH_2O)_y\text{-}(CH_2CH_2O)_zH \qquad IV$$

wobei x, y und z Zahlen darstellen, die so gewählt sind, daß das Molekulargewicht 1800 bis 16000 insgesamt beträgt,

$$RO\text{-}(\overset{CH_3}{\overset{|}{C}}HCH_2O)_x\text{-}(CH_2CH_2O)_y\text{-}H \qquad V$$

in welcher R $C_3$-$C_{18}$-Alkyl bedeutet und x und y Zahlen darstellen, die so gewählt sind, daß das Molekulargewicht insgesamt 2000 bis 7000 beträgt,
b) 20-50, vorzugsweise 30-40 Gew.-% einer Verbindung der Formel VI

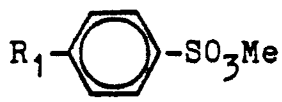

VI

wobei $R_1$ $C_4$-$C_{35}$-Alkyl und Me ein Metallkation aus der II. und III. Gruppe des Periodensystems bedeutet, sowie
c) 0,1-20, vorzugsweise 0,1-10 Gew.-% einer oder mehrerer Verbindungen der Formel VII - XIII

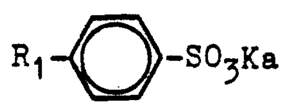

VII

in welcher $R_1$ die gleiche Bedeutung hat wie für Formel VI angegeben und K ein Kation bedeutet, ausgenommen die Kationen der Bedeutung unter Me in Formel VI,

$R\text{-}O\text{-}(CH_2CH_2O)_xSO_3Ka$

in welcher R $C_6$-$C_{18}$-Alkyl, x Zahlen von 2 bis 8 bedeuten und K die für Formel VII angegebene Bedeutung hat,

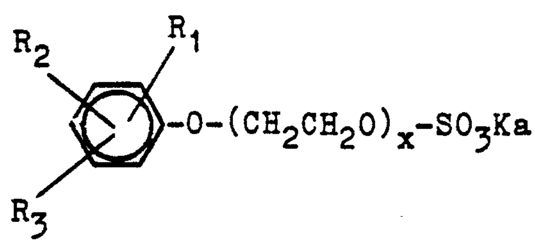

IX

in welcher $R_1$, $R_2$ und $R_3$ Wasserstoff oder $C_1$-$C_{20}$-Alkyl, x eine Zahl von 5 bis 50 bedeuten und Ka die für Formel VII angegebene Bedeutung hat,

$R\text{-}(O)_nSO_3Ka \qquad X$

in welcher R $C_8$-$C_{18}$-Alkyl oder $C_8$-$C_{18}$-Alkenyl oder, für den Fall n = 0 auch $C_4$-$C_{18}$-Chloralkyl, n 0 oder 1 bedeuten und Ka die für Formel VIII angegebene Bedeutung hat,

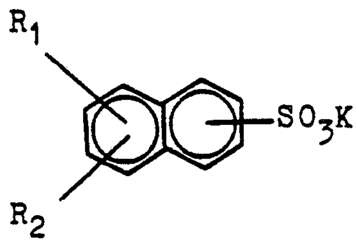

XI

in welcher $R_1$ $C_3$-$C_{13}$-Alkyl und $R_2$ Wasserstoff oder $R_1$ und $R_2$ $C_3$-$C_{13}$-Alkyl bedeuten und Ka die für Formel VII angegebenen Bedeutungen hat,

$R\text{-}SO_2\text{-}\underset{R_1}{N}\text{-}A\text{-}COOKa$

XII

in welcher
R $C_{12}$-$C_{24}$-Alkyl, Phenyl, Naphthyl oder Anthrachinyl, $R_1$ Wasserstoff oder $C_1$-$C_4$-Alkyl und A einen gegebenenfalls durch eine oder mehrere Methyl- oder Ethylgruppen substituierten Alkylenrest mit mehr als 4 C-Atomen bedeutet und Ka die für Formel VII angegebenen Bedeutungen hat,

$R\text{-}CO\underset{R_1}{N}\text{-}(CH_2)_m\text{-}COOKa$

XIII

in welcher R $C_{12}$-$C_{18}$-Alkyl oder $C_6$-$C_{14}$-Cycloalkyl, $R_1$ Wasserstoff oder $C_1$-$C_6$-Alkyl, m 1 oder 2 bedeuten und K die für Formel VII angegebenen Bedeutungen hat,
- und Wasser, und
- gegebenenfalls 1 bis 30 Gew.-% mindestens eines mit Wasser wenig mischbaren organischen Lösungsmittels und/oder eines Stabilisators sowie
- gegebenenfalls 0,1 bis 15 Gew.-% an Zusatzstoffen, wobei die Summe der Komponenten jeweils 100 Gew.-% beträgt.

2. Öl-in-Wasser-Emulsionen nach Anspruch 1, dadurch gekennzeichnet, daß sie 2-20, vorzugsweise 5-15 Gew.-% Glycerin als Zusatzstoff enthalten.

3. Verfahren zur Herstellung von Öl-in-Wasser-Emulsionen gemäß Anspruch 1, dadurch gekennzeichnet, daß man eine homogene Mischung aus
- mindestens einem in Wasser wenig löslichen agrochemischen Wirkstoff einem Wirkstoff zur Bekämpfung von Schädlingen im Haushalts- und Hygiene-Bereich und/oder einem pharmakologisch wirksamen Stoff,
- einem Emulgatorgemisch, wie in Anspruch 1 definiert,
- gegebenenfalls mindestens einem mit Wasser wenig mischbaren organischen Lösungsmittel und/oder eines Solubilisators sowie
- gegebenenfalls Zusatzstoffen
unter Rühren in gegebenenfalls Zusatzstoffe enthaltendes Wasser gibt.

4. Verwendung von Öl-in-Wasser-Emulsionen gemäß Anspruch 1 in der Landwirtschaft und im Gartenbau, im Haushalts-und Hygiene-Bereich und/oder im medizinischen Bereich.